# EUROPÄISCHE PATENTSCHRIFT

(11) **EP 1 711 706 B1**
(45) Veröffentlichungstag und Bekanntmachung des Hinweises auf die Patenterteilung: **14.09.2011**
(21) Anmeldenummer: 05700949.0
(22) Anmeldetag: 15.01.2005
(51) Int. Cl.: F02M 25/12

(54) **REGENERATOR VON VERBRENNUNGSABGASEN MIT KATALYSATOR**
EXHAUST GAS REGENERATOR COMPRISING A CATALYST
REGENERATEUR DE GAZ D'ECHAPPEMENT POURVU D'UN CATALYSEUR

(30) Priorität: 20.01.2004 DE 102004002742
(43) Veröffentlichungstag der Anmeldung: 18.10.2006
(73) Patentinhaber: Lohberg, Werner, 33102 Paderborn (DE)
(72) Erfinder: LOHBERG, Werner, 33102 Paderborn (DE); LEDERER, Hartmut, 12107 Berlin (DE)
(74) Vertreter: Hanewinkel, Lorenz
(86) Internationale Anmeldenummer: PCT/EP2005/000359
(87) Internationale Veröffentlichungsnummer: WO 2005/068818

(56) Entgegenhaltungen:
- EP-A- 1 359 310
- DE-A1- 10 019 007
- US-A- 6 122 909
- US-B1- 6 516 787

## Beschreibung

Die Erfindung betrifft einen Regenerator von Verbrennungsgasen mit einem Abgaskatalysator.

Aus der DE 34 13 419 AI ist es bekannt, in einer Abgasrückführleitung einer Brennkraftmaschine einen beheizten Spaltkatalysator anzuordnen, so dass dessen Regeneratgas in dem Ansaugkanal ergänzend eingespeist wird.

Weiterhin ist aus der DE 100 19 007 AI eine Vorrichtung zur katalytischen Reformierung von Kraftstoff mit Wasser zu Wasserstoff bekannt, wobei der Wasserstoff mit Hilfe eines Katalysators gebildet wird und der entstandene Wasserstoff durch eine Membran von den übrigen Gasen getrennt wird. Hierbei dient Abgas einer Brennkraftmaschine zur Erwärmung des Reformerkatalysators, der der Wasserstoff eingangsseitig ergänzend eingespeist wird.

Weiterhin ist es bekannt, Verbrennungsabgase einer mit Luft und Kohlenwasserstoff-Brennstoff betriebenen Verbrennungsanlage, insbesondere einer Verbrennungskraftmaschine, durch eine Katalysatorvorrichtung hindurchzuleiten, in der unverbrannter Kohlenwasserstoff-Brennstoff und Verbrennungszwischenprodukte, wie Nox, schrittweise in schadstoffarme Abgasendprodukte, wie COMB H20-Dampf und N2, durch eine katalytische Nachverbrennung überführt werden. Durch die Nachverbrennung tritt im Katalysator gewöhnlich im laufenden Betrieb eine Temperatur von ca. 1000 C auf, und es herrscht in seinem Gehäuse gewöhnlich ein Druck von mehreren bar durch den Rückstau im anschließenden Schalldämpfer.

Die üblichen Katalysatoren bestehen aus einer engen großflächigen Lamellenträgerstruktur, die mit einem Platinmetall oder Metallgemisch als wirksames Katalysatormaterial dünn beschichtet ist. Für eine stöchiometrisch ausgewogene Zusammensetzung der Luft- und Brennstoffzufuhr sorgt eine Regelvorrichtung, der als Istsignal ein Messwert einer Abgassonde zugeführt ist, die den Gehalt an Nox misst. Die thermische und chemische in dem Verbrennungsgas enthaltene Energie wird im Katalysator nutzlos als Wärme freigesetzt.

Es ist weiterhin bekannt, einen Teil der heißen Verbrennungsgase abzuzweigen und der Verbrennungsluft beizumischen, wodurch ein Teil der in den Verbrennungsgasen enthaltenen Energie in dem folgenden Verbrennungsvorgang nutzbringend verwertet wird, jedoch führt die durch die noch heißen Verbrennungsgase höhere Ladetemperatur zu einer geringeren Aufladung eines Verbrennungsmotors und damit einer Erniedrigung der Maximalleistung und in vielen Fällen zu einer erhöhten No.- Bildung, die eine unerwünschte Energieverschiebung aus dem Verbrennungsraum in den Katalysator mit sich bringt. Siehe zum Beispiel US 6 122 909 A.

Es ist Aufgabe der Erfindung, die eingangs bezeichnete Vorrichtung zu vereinfachen und die in dem heißen Verbrennungsgas enthaltene Energie besser nutzbar zu machen.

Die Lösung besteht darin, dass der heiß betriebene Katalysator an eine hochtemperaturfeste Diffusionsmembran grenzt, die andererseits an einen Regeneratsammler grenzt, der unter einem niedrigeren Druck als einem jeweils herrschenden Katalysatorinnendruck gehalten ist, und das so anfallende Regeneratorgas einer dem Regenerator vorgeschalteten Verbrennungsvorrichtung als ein ergänzender Brennstoff zugeführt wird.

Vorteilhafte Ausgestaltungen sind in den Unteransprüchen angegeben.

Als kostengünstige Diffusionsmembran hat sich mikroporöses offenporiges Aluminiumoxyd, das auch mit Zirkonoxyd verstärkt sein könnte, bewährt, wobei eine Porenweite von 0,5 bis 2 µm sich als günstig erwies, brennbares Regeneratgas, insbesondere Wasserstoff, aus dem Katalysatorraum abzuleiten.

Auch temperaturfeste mikroporöse Membranen aus Erdalkalisilikaten und/oder-Aluminaten, wie Calcium-Aluminium- Siliziumoxyde haben sich gut bewährt.

Es hat sich gezeigt, dass das Regeneratgas bei niedriger Temperatur aus der Membran austritt und in der Membran ein Temperaturgefälle von 1000 C und mehr auftritt.

Vorzugsweise ist ein handelsüblicher Kraftfahrzeug-Katalysator zum Versuchsbetrieb genutzt worden. Dieser wurde an einer Seite mit der Membran abgedichtet besetzt. Querpässe im Katalysatorblock erleichterten ein seitliches Austreten des Regeneratgases.

Um ein möglichst hohes Druckgefälle über die Membran bereitzustellen, wurde im Katalysatorraum austrittsseitig ein Prallblech angeordnet, das einen erhöhten Staudruck erzeugte.

Zum schnelleren Anfahren des Katalysatorprozesses nach Betriebspausen sind elektrische Glühkerzen, wie aus Dieselmotoren bekannt, und ggf. eine elektrisch gezündete Flammkerze hilfreich, die in den Katalysatormantel eingesetzt sind und in den Katalysatorraum hineinragen. Sobald der Katalysator seine untere Betriebstemperatur von ca. 900 C erreicht hat, wird die Hilfsheizung abgeschaltet. Die katalytische Verbrennung der NOx-Anteile sowie der Kohlenstoffanteile der Kohlenwasserstoffe, die sich im Verbrennungsgas befinden, hält dann die Betriebstemperatur aufrecht, die bis auf 1300 C ansteigen kann.

Das Regeneratgas wird vorteilhaft als Brennstoff genutzt und dazu in den Ansaugkanal der Verbrennungsvorrichtung eingespeist, in dem ein Unterdruck herrscht. Auf diese Weise wird das Druckgefälle über die Membran noch erhöht, was die Diffusion des Regeneratgases noch fördert.

Ein Teil des Energiegehaltes des Verbrennungsgases wird somit aus dem Katalysator in Form von chemischer Energie des Regeneratgases zurück gewonnen und einer Nutzung zugeführt. Da das Regeneratgas im Wesentlichen aus kaltem Wasserstoff besteht, verringert es die Aufladung nicht, wenn die Verbrennungsvorrichtung ein Verbrennungsmotor ist; zudem fördert es den Verbrennungsvorgang durch seine leichte Entzündbarkeit und hohe Brennbarkeit.

Die Verbrennungskraftmaschine kann ohne Änderung mit einem vorgeschalteten Ladekompressor und einem Schalldämpfer anschließend an den Katalysator betrieben werden. Auch lässt sich eine bekannte Wassernebel- oder Wasserdampfinjektion am Ansaugrohr einsetzen, die der Verbrennungsmoderation dient. Der dadurch erhöhte Wasserdampfanteil im Verbrennungsgas wird vorteilhaft im Katalysator gespalten, so dass weiteres Regeneratgas entsteht. Alternativ wird Wassernebel oder Wasserdampf in einem solchen Maß in den Katalysatorraum injiziert, dass die Arbeitstemperatur von 1000 C nicht unterschritten wird. Eine Hülle aus Wärmedämmmaterial reduziert den Reaktorwärmeverlust.

In einer vorteilhaften Ausführung besteht die Diffusionsmembran aus mehreren runden Einzelmembranen, die jeweils in einer metallischen Buchse gefasst sind und mit dieser in einer Trägerplatte abgedichtet eingepresst gehalten sind. Die Trägerplatte besteht vorzugsweise aus mehreren Edelstahlplatten, die jeweils unter Zwischenlage einer Glimmerdichtung aufeinander gestapelt und insgesamt zwischen dem Regeneratsammler und der Katalysatorwandung unter Zwischenlage von Dichtungen in Flanschen verschraubt gehalten sind.

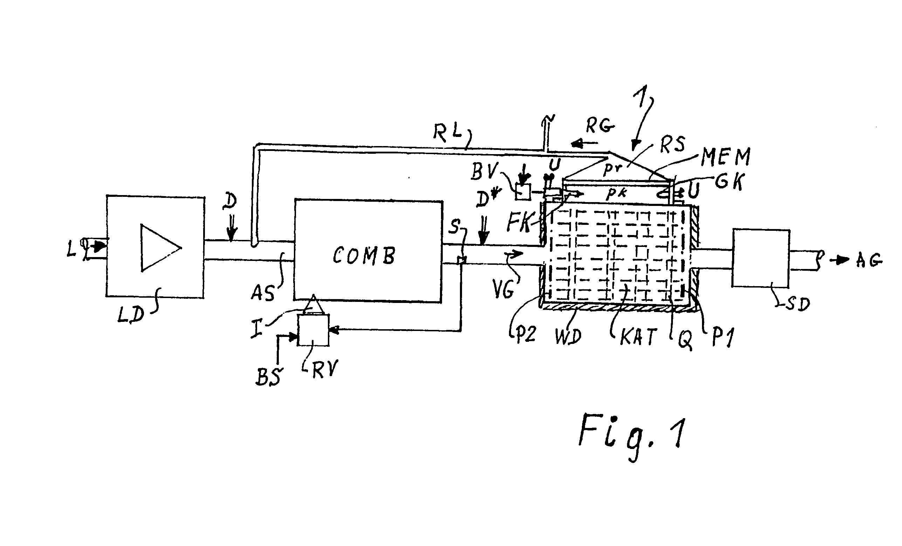

Vorteilhafte Ausgestaltungen sind in den Fig. 1 bis 5 dargestellt.

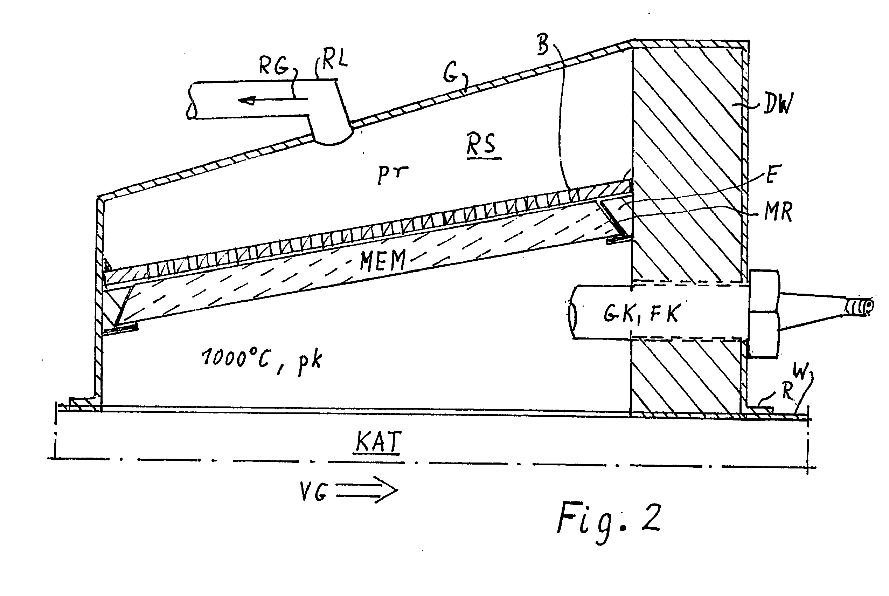

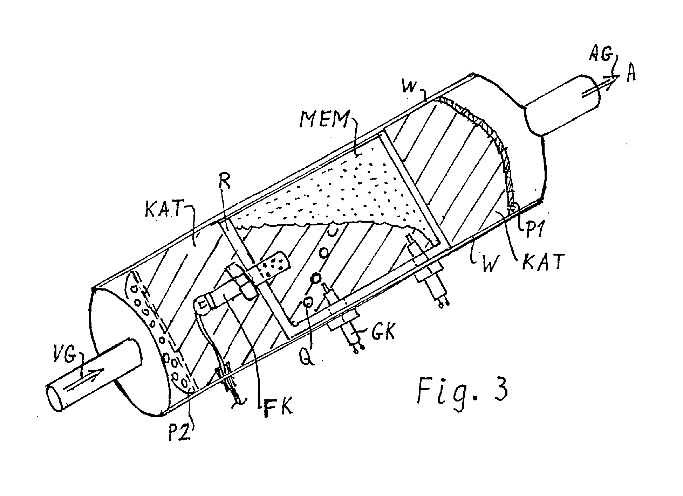

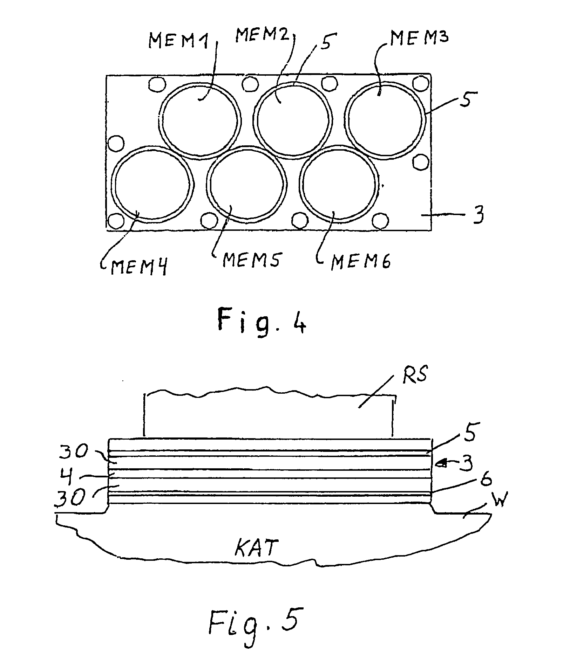

Fig. 1 zeigt ein Blockschaltbild des Regenerators, Fig. 2 zeigt einen Ausschnitt mit einer Membran, Fig. 3 zeigt einen modifizierten Katalysator, Fig. 4 zeigt eine Draufsicht auf eine Einzelmembrananordnung Fig. 5 zeigt eine Seitenansicht zum Membraneinbau.

Das Blockschaltbild Fig. 1 zeigt schematisch eine Anordnung eines Regenerators 1 an einem Katalysator KAT eines Verbrennungsmotors COMB o. dgl., dessen heißes Verbrennungsabgas VG in den Katalysatorraum eingespeist wird. Nach der katalytischen Aufbereitung verlässt das schadstoffarme Abgas AG den Katalysatorraum durch einen Schalldämpfer SD, wobei es an einer ausgangsseitigen Prallplatte P1 aufgestaut wird, so dass im Betrieb im Katalysatorraum ein Innendruck pk herrscht.

Der Katalysatormantel ist in einem Mantelabschnitt entfernt und durch eine Membran MEM aus mikroporösem Keramikmaterial ersetzt.

Dabei ist die Membran (MEM) in einer passenden Einfassung (E) in einem Gehäuse (G) gehalten ist, das mit einem Rahmen (R) in eine Wandung (W) des Katalysators (KAT) angeschweißt ist.

Auf der vom Katalysator abgewandten Seite ist eine Kammer als Regeneratsammler ausgebildet, von der das Regeneratgas RG abgezogen wird.

Vorzugsweise wird das Regeneratgas RG in das Ansaugrohr AS der Verbrennungskraftmaschine COMB eingespeist, in das ggf. durch eine Ladevorrichtung LD die Verbrennungsluft L eingeführt wird.

Der Kohlenwasserstoff-Brennstoff BS, z. B. Benzin, Dieselkraftstoff oder Propangas, wird in bekannter Weise durch einen Injektor I in die Brennräume eingebracht, wobei eine Regelvorrichtung RV, die mittels einer Lambda- Sonde S eingangsseitig des Katalysators KAT verbunden ist, und der jeweils geforderten Motorleistung die jeweils zugeführte Menge des optimalen Kraftstoff Luftsauerstoffgemisches bestimmt, so dass eine schadstoffarme Verbrennung inklusive der katalytischen Nachverbrennung erfolgt.

Außen ist der Katalysator mit hochtemperaturfestem Wärmedämmmaterial WD umschlossen, um den Wärmeverlust gering zu halten. Im Katalysator-Lamellenblock sind Querbohrungen Q eingebracht, die zur Membranseite führen.

In den Katalysatorraum sind zum Vorheizen Glühkerzen GK und/oder eine zusätzlich mit Brennstoff BS gespeiste Flammkerze FK eingeführt. Die Kerzen GK, FK, sind zum Anheizen mit einer elektrischen Spannung U beschaltet, und der Brennstoff BS ist während der Anlaufphase über ein Ventil BV gesteuert zugeführt.

Der Katalysatorraum ist im Beispiel auch zuströmseitig mit einer Prallplatte P2 versehen, die den Druck und die Reaktionswärme, insbesondere beim Anheizen, zurückhält.

Das Regeneratgas RG steht durch die Verbindung zum Ansaugrohr AS unter einem Unterdruck, dem Regeneratdruck pr, so dass die Diffusion des Regeneratgases über ein Druckgefälle vom Überdruck pk zum Unterdruck pr durch die Membran MEM erfolgt, die eine sich in Richtung des Druckgefälles (pk, pr) verjüngende Randabschrägung (R) aufweist und seitens des Regeneratsammlers (RG) mit einem Lochblech (B) abgestützt ist. Das kalte Regeneratgas RG und die dadurch abgekühlte Membran MEM sorgen auch für eine Kühlung der Membranumfassung und des ganzen Regeneratsammlers RS. Vorzugsweise sind die Glüh- und Flammkerzen GK, FK wärmeleitend mit dem Membranrahmen E verbunden oder in die Membran MEM selbst eingesetzt, so dass sie durch die hohe Betriebstemperatur im inneren des Katalysators KAT nicht beschädigt werden.

In einer vorteilhaften Weiterentwicklung wird der Verbrennungsvorrichtung COMB eingangsseitig direkt dosiert Wassernebel oder -dampf D zugeführt, der zur Moderation der Verbrennungstemperatur und damit zur Reduktion vom NOx-Anteil gemäß DE 28 43 335 dient und zusätzlich dem Katalysator KAT als Basis zur Regeneraterzeugung dient. Alternativ oder ergänzend wird in einer weiteren Ausführung dosiert Wasserdampf D* dem Katalysator KAT direkt oder unmittelbar den Verbrennungsgasen VG vor dem Katalysator KAT zugeführt.

Fig. 2 zeigt einen Ausschnitt des Regenerators. Auf dem Katalysatormantel KAT ist ein Rahmen R aufgeschweißt, an dem ein Gehäuse G mit dem Regeneratsammler RS gehalten ist. Das Gehäuse G hat Wandung (W) oder eine verdickte Wandung (DW) oder den Rahmen (R), in die mindestens eine elektrische Glühkerze (GK) und/oder eine brennstoffgespeiste Flammkerze (FK) zu einer Katalysatorheizung eingesetzt ist/sind. Zudem erstreckt sich von ihr zu den übrigen Gehäusewänden in einer abdichtenden Einfassung E die Membran MEM aus mikroporöser Keramik. Es besteht also eine Wärme abführende Verbindung von der Glühkerze GK durch die Gehäusewand DW und die Einfassung E zur diffusionsgekühlten Membran MEM. Aus dem Sammelraum RS führt die Regeneratleitung RL zum Regeneratverbraucher oder-speicher. Die Membran MEM ist vorzugsweise durch ein Lochblech B abgestützt und mit einer Randabschrägung MR abgedichtet eingefasst.

Fig. 3 zeigt einen Katalysator KAT mit der Membran MEM und Flammkerze FK sowie Glühkerzen GK teilweise geöffnet, perspektivisch dargestellt. Der Katalysator KAT enthält mindestens einen mit Katalysatormetall beschichteten Lamellenblock, der mit Querkanälen Q durchsetzt ist, die nahe der Membran MEM enden. Die Querbohrungen Q, die den Katalysatorkörper durchsetzen, sind zu sehen.

Ebenso sind die Prallbleche P1, P2 dargestellt, die mit bis auf einen schmalen Spalt beabstandet und mit engen Durchbrüchen versehen den Katalysatorkörper ein- und ausgangsseitig abschließen.

Die Entstehung des Regeneratgases, das i. a. H2 ist, beginnt bereits bei 200 C, jedoch ist eine Katalysatortemperatur von ca.
1000 C bis 1200 C förderlich.

Die in Abgas-Katalysatoren üblichen Platinmetalle, Palladium o. dgl., lassen sich u. U. auch durch unedle Metalle ersetzen, wenn diese mit geeigneter Oberflächenstruktur auf dem Träger aufgebracht werden. Die Prägestruktur kann aus den bekannten

Waben aus Metall oder Keramik gebildet sein. Diese bieten eine Oberfläche von z. B. 20000 qm/l.

Bei einem handelsüblichen Kfz-Katalysator ist eine Membran von 100 x 150 x 30 mm3 angepasst.

Fig. 4 zeigt die Bildung einer Diffusionsmembran aus mehreren Einzelmembranen MEM1-MEM6, die jeweils als Kreisscheiben ausgebildet sind und in einer metallischen hochtemperaturfesten Buchse gehalten sind.

Die Buchsen 2 sind in einer Trägerplatte 3 hochdruckverpresst und so abgedichtet auch bei hohen Temperaturdifferenzen gehalten. Randseitig sind Verschraubungsbohrungen zu sehen.

Fig. 5 zeigt eine Seitenansicht des Einbaus der zusammengesetzten Membran, deren Trägerplatte 3 zwischen dem mit einem Flansch versehenen Katalysatorgehäuse W und einem Flansch des Regeneratsammlers RS jeweils unter Einfügung einer Glimmerdichtung 5,6 verschraubt gehalten ist. Die Trägerplatte 3 ist sandwichartig geschichtet aufgebaut, indem zwischen zwei Edelstahlplatten 30 eine Dichtungsplatte 4 eingefügt ist.

Die Dichtungsplatte 4 besteht vorzugsweise aus hochtemperaturfestem Glimmermaterial und schließt wie die Edelstahlplatten 30 um die Buchsen in enger Fassung ab.

### Bezugszeichenliste

- COMB: Verbrennungsvorrichtung
- KAT: Abgaskatalysator
- L: Luft
- BS: Brennstoff
- I: Injektor
- LD: Ladevorrichtung
- AG: Abgas
- MEM: Diffusionsmembran
- RG: Regeneratgas
- RS: Regeneratsammler
- Q: Querkanäle
- P1, P2: Prallbleche
- VG: Verbrennungsgase
- AS: Ansaugrohr
- FK: Flammkerze
- BV: Brennstoffventil
- U: el. Kerzenanschluss
- GK: Glühkerze
- S: Lambda-Sonde
- RV: Regelvorrichtung
- 1: Regenerator
- pr: Regeneratdruck
- pk: Katalysatorinnendruck
- SD: Schalldämpfer
- WD: Wärmedämmung
- RL: Regeneratleitung
- R: Rahmen
- G: Gehäuse
- E: Einfassung
- DW: Gehäusewandung
- D, D*: Dampf
- B: Lochblech
- MR: Randabschrägung
- W: K-Wandung
- 3: Trägerplatte
- 30: Edelstahlplatten
- 4: Dichtungsplatte
- 5: Glimmerdichtung
- 6: Glimmerdichtung
- MEM1: Einzelmembran
- MEM2: Einzelmembran

## Patentansprüche

1. Regenerator von Verbrennungsabgasen (VG) mit einem Abgaskatalysator (KAT), **dadurch gekennzeichnet, dass** der heiß betriebene Katalysator (KAT) an eine hochtemperaturfeste Diffusionsmembran (MEM) grenzt, die andererseits an einen Regeneratsammler (RS) grenzt, der unter einem niedrigeren Druck (pr) als einem jeweils herrschenden Katalysatorinnendruck (pk) gehalten ist und das so anfallende Regeneratgas (RG) einer dem Regenerator (1) vorgeschalteten Verbrennungsvorrichtung (COMB) als ein ergänzender Brennstoff zugeführt wird.

2. Regenerator nach Anspruch 1, **dadurch gekennzeichnet, dass** die Diffusionsmembran (MEM) aus einer hochtemperaturfesten mikroporösen offenporigen Keramik besteht.

3. Regenerator nach Anspruch 2, **dadurch gekennzeichnet, dass** die Membran (MEM) aus Erdalkali-Aluminaten und/oder Silikaten besteht.

4. Regenerator nach Anspruch 2 oder 3, **dadurch gekennzeichnet, dass** die Membran (MEM) aus Aluminiumoxid besteht.

5. Regenerator nach einem der vorstehenden Ansprüche, **dadurch gekennzeichnet, dass** die Membran (MEM) in einer passenden Einfassung (E) in einem Gehäuse (G) gehalten ist, das mit einem Rahmen (R) in eine Wandung (W) des Katalysators (KAT) angeschweißt ist.

6. Regenerator nach Anspruch 5, **dadurch gekennzeichnet, dass** die Membran (MEM) eine in Richtung des Druckgefälles (pk, pr) verjüngende Randabschrägung (R) aufweist.

7. Regenerator nach einem der vorstehenden Ansprüche, **dadurch gekennzeichnet, dass** die Membran (MEM) seitens des Regeneratsammlers (RG) mit einem Lochblech (B) abgestützt ist.

8. Regenerator nach einem der Ansprüche 5 bis 7, **dadurch gekennzeichnet, dass** in die Wandung (W) oder eine verdickte Wandung (DW) oder den Rahmen (R) mindestens eine elektrische Glühkerze (GK) und/oder eine brennstoff gespeiste Flammkerze (FK) zu einer Katalysatorheizung eingesetzt ist/sind.

9. Regenerator nach einem der vorstehenden Ansprüche, **dadurch gekennzeichnet, dass** der Katalysator (KAT) aus- und/oder eingangsseitig jeweils mit einem Prallblech (P1, P2) bestückt ist.

10. Regenerator nach einem der vorstehenden Ansprüche, **dadurch gekennzeichnet, dass** der Katalysator (KAT) mindestens einen mit Katalysatormetall beschichteten Lamellenblock enthält, der mit Querkanälen (Q) durchsetzt ist, die nahe der Membran (MEM) enden.

11. Regenerator nach einem der vorstehenden Ansprüche, **dadurch gekennzeichnet, dass** der Katalysator (KAT) mit hochtemperaturfestem Wärmedämmmaterial (WD) umschlossen ist.

12. Regenerator nach einem der vorstehenden Ansprüche, **dadurch gekennzeichnet, dass** die Verbrennungsvorrichtung (COMB) mit Luft (L) und einem Kohlenwasserstoffbrennstoff(BS) über eine Regelvorrichtung (RV) gespeist ist, die mittels einer Lambda- Sonde (S) eingangsseitig des Katalysators (KAT) verbunden ist.

13. Regenerator nach Anspruch 12, **dadurch gekennzeichnet, dass** der Verbrennungsvorrichtung (COMB) oder dem Katalysator (KAT) direkt Wassernebel oder -dampf (D, D*) dosiert zugeführt wird.

14. Regenerator nach einem der vorstehenden Anspruche, **dadurch gekennzeichnet, dass** die Verbrennungsvorrichtung (COMB) eine Verbrennungskraftmaschine ist.

15. Regenerator nach Anspruch 14, **dadurch gekennzeichnet, dass** der Verbrennungskraftmaschine (COMB) eine Luftladevorrichtung (LD) vorgeschaltet ist.

16. Regenerator nach Anspruch 14 oder 15, **dadurch gekennzeichnet, dass** dem Katalysator (KAT) ein Schalldämpfer (SD) nachgeschaltet ist.

17. Regenerator nach einem der Ansprüche 14 bis 16, **dadurch gekennzeichnet, dass** das Regeneratgas (RG) mit einer Regeneratleitung (RL) in eine Ansaugleitung (AS) der Verbrennungskraftmaschine (COMB) eingeleitet ist.

18. Regenerator nach einem der vorstehenden Ansprüche, **dadurch gekennzeichnet, dass** die Diffusionsmembran (MEM1-MEM6) aus mehreren runden Einzelmembranen besteht, die jeweils in eine metallische, hochtemperaturfeste Buchse (2) eingefasst sind und abgedichtet in eine Trägerplatte (3) eingesetzt sind.

19. Regenerator nach Anspruch 18, **dadurch gekennzeichnet, dass** die Trägerplatte (3) aus mindestens zwei Edelstahlplatten (30,31) mit jeweils zwischen liegenden Dichtungsplatten (4) besteht und die Buchsen (2) hochdruckverpresst in der Trägerplatte (3) gehalten sind.

20. Regenerator nach Anspruch 19, **dadurch gekennzeichnet, dass** die Dichtungsplatten (4) aus einem Glimmerdichtmaterial bestehen und die Trägerplatte (3) mittels Glimmerdichtungen (5,6) zwischen einer Wandung (W) des Katalysators (KAT) und dem Regeneratsammler (RS) verschraubt gehalten ist.

## Claims

1. Regenerator of combustion exhaust gases (VG) comprising an exhaust gas catalyst (KAT), **characterized in that** the hot-operated catalyst (KAT) is located adjacent to a diffusion membrane (MEM) that is resistant to high temperatures and is, in turn, adjacent to a regenerated gas collector (RS) that is maintained at a lower pressure (pr) than the respectively prevailing inner pressure (pk) in the catalyst, and the regenerated gas (RG) produced is supplied as a complementary fuel to a combustion device (COMB) mounted upstream of the regenerator (1).

2. Regenerator according to claim 1, **characterized in that** the diffusion membrane (MEM) is made of a micro porous, open pored ceramic material that is resistant to high temperatures.

3. Regenerator according to claim 1, **characterized in that** the diffusion membrane (MEM) is made of earthy base aluminates and / or silicates.

4. Regenerator according to claim 2 or 3, **characterized in that** the diffusion membrane (MEM) is made of aluminum oxide.

5. Regenerator according to one of the above claims, **characterized in that** the diffusion membrane (MEM) is held in a fitted mounting (E) in a casing (G), which, in turn, is welded on a wall (W) of the catalyst (KAT) with a frame (R).

6. Regenerator according to claim 5, **characterized in that** the diffusion membrane (MEM) features an edge (R) that is tapered in the direction of the pressure gradient (pk, pr).

7. Regenerator according to one of the above claims, **characterized in that** the diffusion membrane (MEM) is supported by a perforated sheet (B) on the side of the regenerated gas collector (RG).

8. Regenerator according to one of the claims 5 to 7, **characterized in that** at least one electric glow plug (GK) and / or fuel-fed flame glow plug (FK) is/are inserted in the wall (W) or in a thickened wall (DW) or in the frame (R) for the heating of the catalyst.

9. Regenerator according to one of the above claims, **characterized in that** the catalyst (KAT) is equipped upstream and / or downstream with one baffle plate (P1, P2), respectively.

10. Regenerator according to one of the above claims, **characterized in that** the catalyst (KAT) comprises at least one lamellated block, which is coated with a metal catalyst, and which is perforated by lateral ducts (Q) that end near the diffusion membrane (MEM).

11. Regenerator according to one of the above claims, **characterized in that** the catalyst (KAT) is encased in a high-temperature resistant insulating layer (WD).

12. Regenerator according to one of the above claims, **characterized in that** the combustion device (COMB) is supplied with air (L) and a hydrocarbon fuel (BS) via a control device (RV), which, by means of a lambda probe (S) is connected at the input side of the catalyst
(KAT).

13. Regenerator according to claim 12, **characterized in that** water mist or vapor (D, D *) is dosed and supplied directly to the combustion device (COMB) or to the catalyst (KAT).

14. Regenerator according to one of the above claims, **characterized in that** the combustion device (COMB) is an internal combustion engine.

15. Regenerator according to claim 14, **characterized in that** an air loading device (LD) is connected upstream of the internal combustion engine (COMB).

16. Regenerator according to claim 14 or 15, **characterized in that** a silencer (SD) is connected downstream to the catalyst (KAT).

17. Regenerator according to claim 14 to 16, **characterized in that** the regenerated gas (RG) is supplied to an intake duct (AS) of the internal combustion engine (COMB) by means of a regenerate pipe (RL).

18. Regenerator according to one of the above claims, **characterized in that** the diffusion membrane (MEM1-MEM6) consists of multiple circular single membranes, each of which is contained in a metal socket (2) that is resistant to high temperatures, and each of which is inserted leak proof into a mounting plate (3).

19. Regenerator according to claim 18 **characterized in that** the mounting plate (3) consists of at least two high-grade steel plates (30, 31), with interlaying gaskets (4), and that the sockets (2) are inserted by high pressure into the mounting plate (3).

20. Regenerator according to claim 18 **characterized in that** the gaskets (4) consist of a micaceous sealing matter, and that the mounting plate (3) is bolted with interlaying micaceous gaskets (5,6), between one wall (W) of the catalyst (KAT) and the regenerated gas collector (RS).

## Revendications

1. Régénérateur de gaz d'échappement de combustion (VG) comprenant un catalyseur de gaz d'échappement (KAT), **caractérisé en ce que** le catalyseur opéré au chaud (KAT) est adjacent à une membrane de diffusion (MEM) résistante à des températures élevées, qui à son tour est jouxte d'un collecteur de gaz régénéré (RS) dont la pression (pr) est maintenue inférieure à une pression actuelle à l'intérieur du catalyseur (pk), et le gaz régénéré (RG) ainsi produit est fourni en tant que combustible complémentaire à une unité de combustion (COMB) montée en amont du régénérateur (1).

2. Régénérateur selon la revendication 1, **caractérisé en ce que** la membrane de diffusion (MEM) consiste en un matériel céramique microporeux à pores ouverts, qui est résistant à des températures élevées.

3. Régénérateur selon la revendication 1, **caractérisé en ce que** la membrane de diffusion (MEM) consiste en silicates et / ou aluminates alcalino-terreux.

4. Régénérateur selon la revendication 2 ou 3, **caractérisé en ce que** la membrane de diffusion (MEM) consiste en oxyde d'aluminium.

5. Régénérateur selon l'une des revendications précédentes, **caractérisé en ce que** la membrane de diffusion (MEM) est maintenue dans une bordure adaptée (E) dans un boîtier (G), qui, à son tour, est soudé sur une paroi (W) du catalyseur (KAT) avec un cadre (R).

6. Régénérateur selon la revendication 5, **caractérisé en ce que** la membrane de diffusion (MEM) dispose d'un bord (R) qui est effilé dans le sens du gradient de pression (pk, pr).

7. Régénérateur selon l'une des revendications précédentes, **caractérisé en ce que** la membrane de diffusion (MEM) est soutenue par une tôle perforée (B) sur le côté du collecteur de gaz régénéré (RG).

8. Régénérateur selon l'une des revendications 5 à 7, **caractérisé en ce que** au moins une bougie de préchauffage électrique (GK) et / ou une bougie à flamme (FK) alimenté de carburant est / sont inséré/s dans la paroi (W) ou dans une paroi épaissie (DW) ou dans le cadre (R) pour le chauffage du catalyseur.

9. Régénérateur selon l'une des revendications précédentes, **caractérisé en ce que** le catalyseur (KAT) est équipé, en amont et / ou en aval, avec respectivement une chicane (P1, P2).

10. Régénérateur selon l'une des revendications précédentes, **caractérisé en ce que** le catalyseur (KAT) comprend au moins un bloc lamellaire, qui est recouvert d'un métal catalyseur, et qui est perforée par des conduits latéraux (Q) qui se terminent près de la membrane de diffusion (MEM).

11. Régénérateur selon l'une des revendications précédentes, **caractérisé en ce que** le catalyseur (KAT) est enfermée dans une couche isolante résistante à des températures élevées (WD).

12. Régénérateur selon l'une des revendications précédentes, **caractérisé en ce que** l'unité de combustion (COMB) est alimentée avec de l'air (L) et un carburant hydrocarbure (BS) via une unité de commande (RV), qui est reliée sur le côté entrée du catalyseur (KAT) au moyen d'une sonde lambda (S).

13. Régénérateur selon la revendication 12, **caractérisé en ce que** du brouillard d'eau ou du vapeur (D, D *) est dosé et alimenté directement à l'unité de combustion (COMB) ou au catalyseur (KAT).

14. Régénérateur selon l'une des revendications précédentes, **caractérisé en ce que** l'unité de combustion (COMB) est un moteur à combustion interne.

15. Régénérateur selon la revendication 14, **caractérisé en ce que** une unité d'alimentation d'air (LD) est connectée en amont du moteur à combustion interne (COMB).

16. Régénérateur selon la revendication 14 ou 15, **caractérisé en ce que** d'un silencieux (SD) est connecté en aval du catalyseur (KAT).

17. Régénérateur selon la revendication 14 à 16, **caractérisé en ce que** le gaz régénéré (RG) est alimenté à une conduite d'admission (AS) du moteur à combustion interne (COMB) au moyen d'une conduite de gaz régénéré (RL).

18. Régénérateur selon l'une des revendications précédentes, **caractérisé en ce que** la membrane de Diffusion (MEM1-MEM6) se compose de plusieurs membranes circulaires individuelles, dont chacune est contenue dans une douille métallique (2) qui est résistante à des températures élevées, et dont chacune est insérée de façon scellé dans une plaque de montage (3).

19. Régénérateur selon la revendication 18 **caractérisé en ce que** la plaque de montage (3) se compose d'au moins deux plaques d'acier spécial (30, 31), avec des plaques de étanchéité intermédiaires (4), et que les douilles (2) sont maintenues, insérés par haute pression, dans la plaque de montage (3).

20. Régénérateur selon la revendication 18 **caractérisé en ce que** les joints (4) se composent d'une matière micacée d'étanchéité, et que la plaque de montage (3) est boulonné avec des plaques de étanchéité micacées intermédiaires (5,6), entre une paroi (W) du catalyseur ( KAT) et le collecteur de gaz régénéré (RS).
